# EUROPEAN PATENT APPLICATION

(11) **EP 4 451 523 A1**
(43) Date of publication of application: **23.10.2024**
(21) Application number: 24168922.3
(22) Date of filing: 08.04.2024
(51) Int. Cl.: H02K 5/20, H02K 9/19

(54) **BACK IRON HEAT EXCHANGERS FOR ELECTRIC MACHINES**

(30) Priority: 07.04.2023 US 202318132206
(71) Applicant: Hamilton Sundstrand Corporation, Charlotte, NC 28217-4578 (US)
(72) Inventor: CAMPBELL, Kris H., Poplar Grove, IL 61065 (US); PAL, Debabrata, Hoffman Estates, IL 60195 (US); JOSHI, Ashutosh, Roscoe, IL 61073 (US); KRECKLOW, Joshua J., Leaf River, IL 61047 (US)
(74) Representative: Dehns

(57) **Abstract**

An electric machine assembly includes a stator (102). The stator includes a core (106) defining a rotational axis, windings (108) assembled into the core, and a back iron heat exchanger (110) mounted to the core, extending around the rotational axis. A plurality of coolant circuits (112, 114, 116) pass from one or more coolant inlets (118) in the back iron heat exchanger through the back iron heat exchanger, to one or more coolant outlets (120) in the back iron heat exchanger. Between the one or more coolant inlets and the one or more coolant outlets, the plurality of cooling circuits are in fluid isolation from one another and from radially inner and outer surfaces (122, 124) of the back iron heat exchanger.

## Description

### BACKGROUND

### 1. Field

The present disclosure relates to heat exchangers, and more particularly to back iron heat exchangers for electric machines such as generators and motors.

### 2. Description of Related Art

Electrodynamic machines are becoming more energy dense. As such, they are creating more heat to be dissipated. Improved heat exchangers are needed to remove this additional heat while maintaining or reducing temperatures to achieve longer life.

The conventional techniques have been considered satisfactory for their intended purpose. However, there is an ever present need for improved systems and methods for thermal management in electric machine. This disclosure provides a solution for this need.

### SUMMARY

An electric machine assembly includes a stator. The stator includes a core defining a rotational axis, windings assembled into the core, and a back iron heat exchanger mounted to the core, extending around the rotational axis. A plurality of coolant circuits pass from one or more coolant inlets in the back iron heat exchanger through the back iron heat exchanger, to one or more coolant outlets in the back iron heat exchanger. Between the one or more coolant inlets and the one or more coolant outlets, the plurality of cooling circuits are in fluid isolation from one another and from radially inner and outer surfaces of the back iron heat exchanger.

The back iron heat exchanger can include a monolithic body that separates between the radially inner and outer surfaces, and separates between the plurality of coolant circuits. Each coolant circuit in the plurality of coolant circuits can be connected to a single inlet and to an a single outlet. Each coolant circuit in the plurality of coolant circuits can have its own respective inlet among the one or more coolant inlets. Each of the respective inlets can be circumferentially spaced apart from the others of the respective inlets relative to the rotational axis. Each coolant circuit in the plurality of coolant circuits can have its own respective outlet among the one or more coolant outlets. Each of the respective outlets can be circumferentially spaced apart from the others of the respective outlets relative to the rotational axis.

Each of the plurality of coolant circuits can include a plurality of axially spaced apart ring passages connected in a series by a plurality of axial connecting passages. The plurality of axially spaced apart ring passages of each of the plurality of coolant circuits can be offset radially and/or axially relative to those of the others of the plurality of coolant circuits. The ring passages can be arranged for counter flowing directions relative to one another. The ring passages for each of the plurality of coolant circuits can be connected in a helical flow pattern. The helical flow pattern can include an inlet at one end and an outlet at an opposite end. The helical flow pattern can include an inlet in a mid-portion of the helical flow pattern, and an outlet at each of opposite ends of the helical flow pattern. The ring passages for each of the plurality of coolant circuits can be connected in a flow pattern so each ring passage has a clockwise flow portion and a counterclockwise flow portion. The flow pattern can include an inlet at one end and an outlet at an opposite end. The flow pattern can include an inlet in a mid-portion of the helical flow pattern, and an outlet at each of opposite ends of the helical flow pattern.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional side elevation view of an embodiment of an electric machine assembly constructed in accordance with the present disclosure, showing the back iron heat exchanger;
Fig. 2 is a schematic perspective view of the assembly of Fig. 1, showing three coolant inlets into the back iron heat exchanger;
Fig. 3 is a schematic cross-sectional side elevation view of the assembly of Fig. 1, showing the ring passages of one of the coolant circuits schematically;
Figs. 4a-d are schematic representations of four arrangements of the ring passages of Fig. 3; and
Figs. 5a and 5b are schematic representations of three coolant circuits in the assembly of Fig. 1, wherein Fig. 5b shows a schematic cross-sectional side elevation view of the back iron heat exchanger as in Fig. 1.

### DETAILED DESCRIPTION OF THE PREFERRED EMBODIMENTS

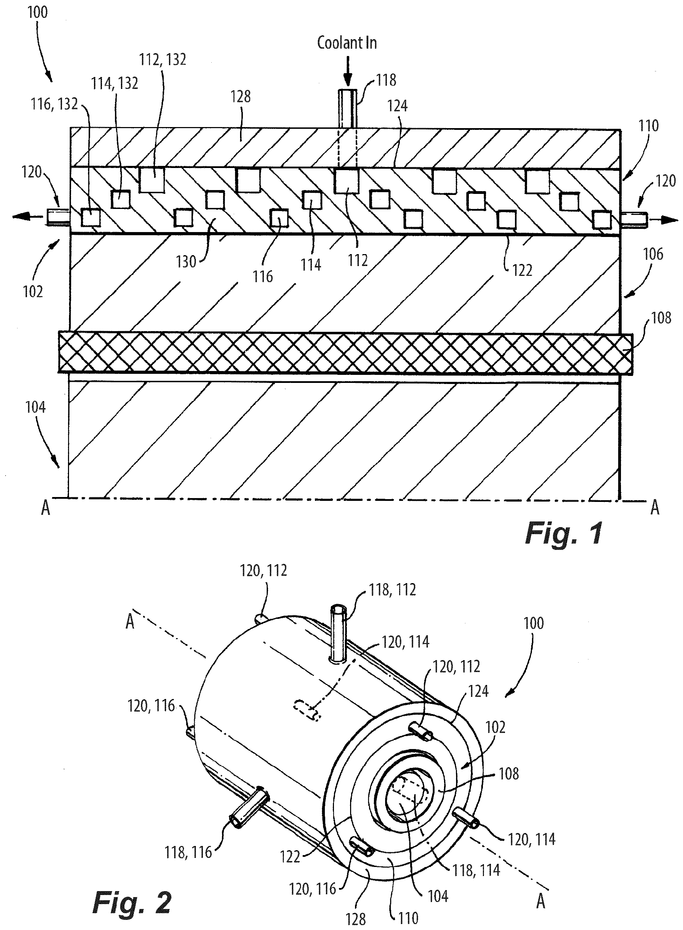

Reference will now be made to the drawings wherein like reference numerals identify similar structural features or aspects of the subject disclosure. For purposes of explanation and illustration, and not limitation, a partial view of an embodiment of an electric machine assembly in accordance with the disclosure is shown in Fig. 1 and is designated generally by reference character 100. Other embodiments of systems in accordance with the disclosure, or aspects thereof, are provided in Figs. 2-5b, as will be described. The systems and methods described herein can be used to provide cooling to electric machines such as generators and motors with improved thermal management relative to the traditional configurations.

The electric machine assembly 100 includes a stator 102 and a rotor 104 that rotates within the stator 102 about rotational axis A to generate power or provide motoring torque, depending on whether the assembly 100 is a generator or motor. The stator 102 includes a yoke or core 106 that defines the rotational axis A, and windings 108 assembled into the core 106. Heat is generated in the stator core 106 and windings 108 during operation of the electric machine assembly 100. A back iron heat exchanger 110 is mounted to the core 106, extending around the rotational axis A. A plurality of coolant circuits 112, 114, 116 pass from one or more coolant inlets 118 in the back iron heat exchanger 110, through the back iron heat exchanger 110, to one or more coolant outlets 120 in the back iron heat exchanger 110. Between the one or more coolant inlets 118 and the one or more coolant outlets 120 (i.e. downstream of the inlet 118 and upstream of the outlets 120), the plurality of cooling circuits 112, 114, 116 are in fluid isolation from one another and from radially inner and outer surfaces 122, 124 of the back iron heat exchanger 110. This means that in transit between a respective inlet 118 and a respective outlet 120, coolant fluid will not come into contact with the core 106 or with the housing 128 surrounding the back iron heat exchanger 110. The back iron heat exchanger 110 includes a monolithic, e.g. additively manufactured, body 130 that separates between the radially inner and outer surfaces 122, 124, and separates between the plurality of coolant circuits 112, 114, 116. Any suitable additive manufacturing material can be used, and the housing 128 can be additively manufactured together with the back iron heat exchanger 110 as a single monolithic build. Those skilled in the art will readily appreciate that while shown and described herein with three coolant circuits, any suitable number of coolant circuits can be included without departing from the scope of this disclosure.

With reference now to Fig. 2, Each coolant circuit 112, 114, 116 has its own respective inlet 118. Each of the respective inlets 118 is circumferentially spaced apart from the other inlets 118 relative to the rotational axis A, e.g. in Fig. 2 the inlets 118 are spaced 120° from one another. Each coolant circuit 112, 114, 116 has its own respective pair of outlets 120, one on each axial end of the stator 102, which are spaced circumferentially apart like the inlets 118. This helps reduce temperature gradients along the axis A of the assembly 100 and thereby reduces maximum temperature.

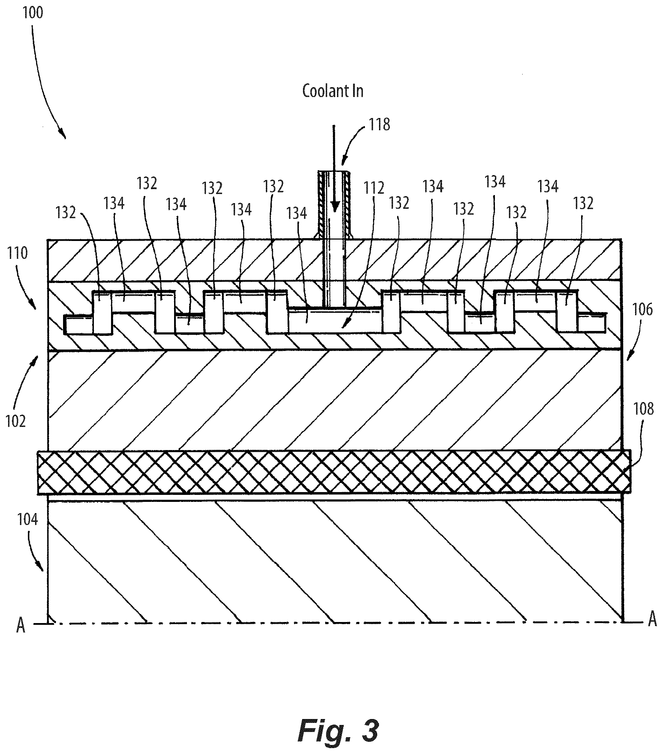

With reference now to Fig. 3, one of the coolant circuits 112 is described in more detail, however, those skilled in the art will readily appreciate that the same general structures apply to the other circuits 114, 116 as well. Each of the coolant circuits 112 includes a plurality of axially spaced apart ring passages 132 connected in a series by a plurality of axial connecting passages 134. The plurality of axially spaced apart ring passages 132 of each of the plurality of coolant circuits 112, 114, 116 is offset radially and/or axially relative to those of the others of the plurality of coolant circuits 112, 114, 116, as shown in Fig. 1.

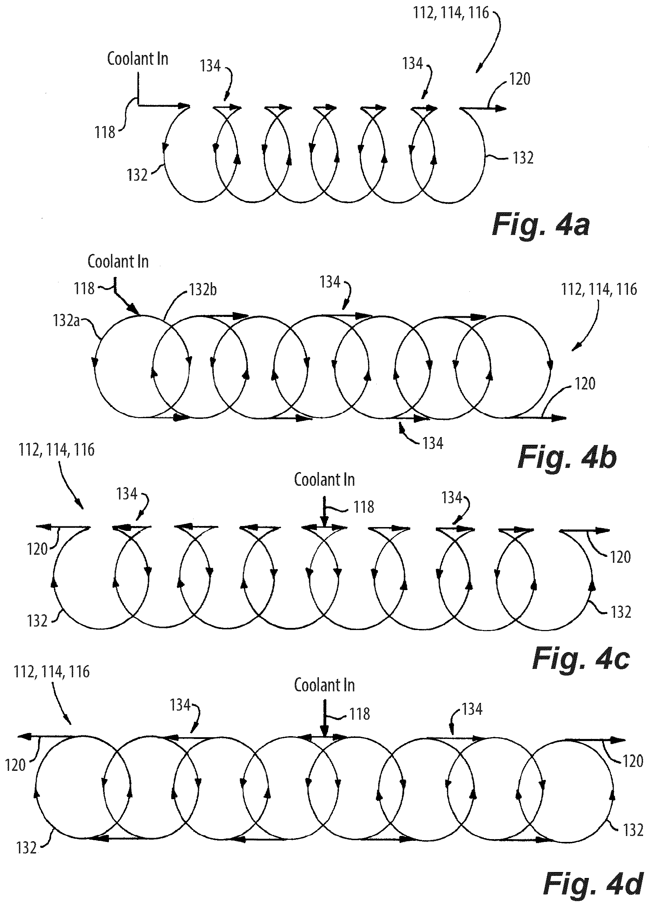

With reference now to Figs. 4a-4d, there are four arrangements of the ring passages 132 shown. In Fig. 4a, The ring passages 132 are connected in a helical flow pattern, with one inlet 118, one outlet 120 at the end opposite the inlet 118, and the flow direction indicated schematically by the flow arrows in the ring passages 132. The flow direction could be reversed from one coolant circuit 112, 114, 116 to the next, e.g. ordered as in Fig. 1, for counter flowing directions relative to one another. In Fig. 4c, a similar helical arrangement of the ring passages and axial connecting passages 134 is shown, but with a single, centrally located inlet 118 feeding two opposite outlets 120 at either end of the helical pattern. A helical flow pattern along with multiple parallel channels reduce the pressure drop required to pump the coolant, e.g. coolant oil, in the channels, i.e. coolant circuits 112, 114, 116.

In Fig. 4b, the ring passages 132 for each of the plurality of coolant circuits are connected in a flow pattern so each ring passage 132 has a clockwise flow portion 132a and a counterclockwise flow portion 132b. In Fig. 4b, the flow pattern includes an inlet 118 at one end and an outlet 120 at an opposite end of the flow pattern. Fig. 4d shows a similar flow pattern to that in Fig. 4b, but with a single, centrally located inlet 118 feeding two opposite outlets 120 at either end of the helical pattern.

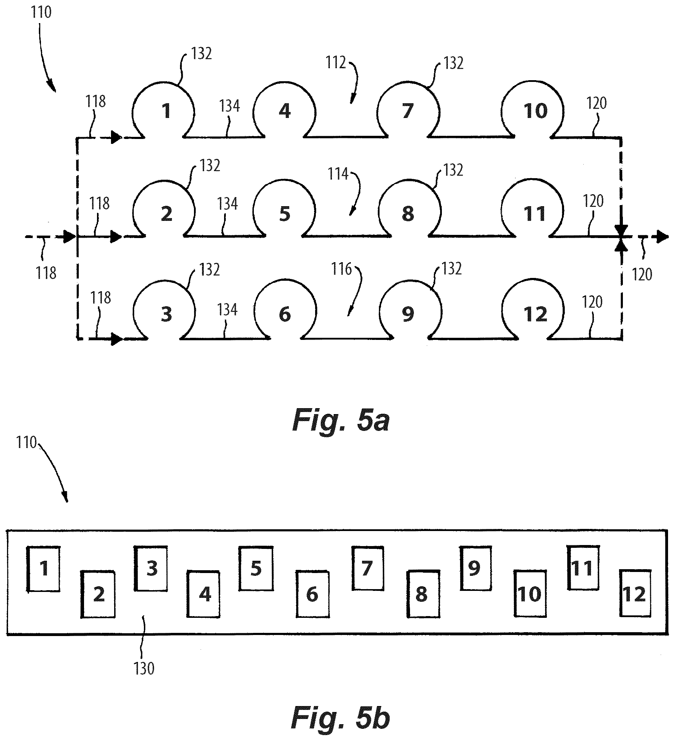

As shown schematically in Fig. 5, each of the respective coolant circuits 112, 114, 116 has its own respective inlets 118 and outlets 120. However, as indicated in broken lines, all of the circuits 112, 114, 116 could be connected to a single inlet 118 and a single outlet 120. Fig. 5b shows an exemplary configuration with four ring passages 132 in each of the coolant passages 112, 114, 116, for a total of twelve ring passages, numbered 1-12. Those skilled in the art will readily appreciate that any other suitable number of ring passages 132 can be used. Fig. 5b shows how the ring passages are arranged axially and radially off set from one another from one circuit to the next for the coolant circuits 112, 114, 116, where the same ring passage numbers 1-12 are used from Fig. 5a.

Systems and methods as disclosed herein provide potential benefits over traditional configurations including the following. Systems and methods as disclosed herein provide improved heat transfer due to the ability to tailor channel size in the coolant circuits for a given application. There can be reduced leakage resulting in consistent cooling flow in channels. This can provide for negligible variability due to higher coolant, e.g. oil, temperature and/or gaps between the back iron heat exchanger and the housing that occurs in traditional designs.

The methods and systems of the present disclosure, as described above and shown in the drawings, provide for cooling electric machines such as generators and motors with improved thermal management relative to the traditional configurations. While the apparatus and methods of the subject disclosure have been shown and described with reference to preferred embodiments, those skilled in the art will readily appreciate that changes and/or modifications may be made thereto without departing from the scope of the subject disclosure.

## Claims

1. An electric machine assembly comprising:
a stator (102) including:
a core (106) defining a rotational axis;
windings (108) assembled into the core; and
a back iron heat exchanger (110) mounted to the core, extending around the rotational axis,
wherein a plurality of coolant circuits (112, 114, 116) pass from one or more coolant inlets (118) in the back iron heat exchanger through the back iron heat exchanger, to one or more coolant outlets (120) in the back iron heat exchanger, wherein between the one or more coolant inlets and the one or more coolant outlets, the plurality of cooling circuits are in fluid isolation from one another and from radially inner and outer surfaces (122, 124) of the back iron heat exchanger.

2. The assembly as recited in claim 1, wherein the back iron heat exchanger (110) includes a monolithic body (130) that separates between the radially inner and outer surfaces (122, 124), and separates between the plurality of coolant circuits (112, 114, 116).

3. The assembly as recited in claim 1 or 2, wherein each coolant circuit in the plurality of coolant circuits (112, 114, 116) is connected to a single inlet (118) and to a single outlet (120).

4. The assembly as recited in claim 1 or 2, wherein each coolant circuit in the plurality of coolant circuits (112, 114, 116) has its own respective inlet among the one or more coolant inlets (118).

5. The assembly as recited in claim 4, wherein each of the respective inlets (118) is circumferentially spaced apart from the others of the respective inlets relative to the rotational axis.

6. The assembly as recited in claim 4, wherein each coolant circuit in the plurality of coolant circuits (112, 114, 116) has its own respective outlet among the one or more coolant outlets (120).

7. The assembly as recited in claim 6, wherein each of the respective outlets (120) is circumferentially spaced apart from the others of the respective outlets relative to the rotational axis.

8. The assembly as recited in any preceding claim, wherein each of the plurality of coolant circuits (112, 114, 116) includes a plurality of axially spaced apart ring passages (132) connected in a series by a plurality of axial connecting passages (134).

9. The assembly as recited in claim 8, wherein the plurality of axially spaced apart ring passages (132) of each of the plurality of coolant circuits (112, 114, 116) is offset radially and/or axially relative to those of the others of the plurality of coolant circuits.

10. The assembly as recited in claim 8, wherein the ring passages (132) are arranged for counter flowing directions relative to one another.

11. The assembly as recited in claim 8, wherein the ring passages (132) for each of the plurality of coolant circuits (112, 114, 116) are connected in a helical flow pattern.

12. The assembly as recited in claim 11, wherein the helical flow pattern includes an inlet at one end and an outlet at an opposite end.

13. The assembly as recited in claim 11, wherein the helical flow pattern includes an inlet in a mid-portion of the helical flow pattern, and an outlet at each of opposite ends of the helical flow pattern.

14. The assembly as recited in claim 8, wherein the ring passages (132) for each of the plurality of coolant circuits (112, 114, 116) are connected in a flow pattern so each ring passage has a clockwise flow portion and a counterclockwise flow portion.

15. The assembly as recited in claim 14, wherein the flow pattern includes an inlet at one end and an outlet at an opposite end; or wherein the flow pattern includes an inlet in a mid-portion of the helical flow pattern, and an outlet at each of opposite ends of the helical flow pattern.
